# EUROPEAN PATENT APPLICATION

(11) **EP 4 575 996 A1**
(43) Date of publication of application: **25.06.2025**
(21) Application number: 23888608.9
(22) Date of filing: 02.11.2023
(51) Int. Cl.: G06T 7/70, A22C 17/00, A22C 17/02, B26D 3/00, B26D 5/32, B26D 5/34, B26D 7/02, G01B 11/00, G06T 7/00

(54) **GRIPPING POSITION IDENTIFICATION SYSTEM, DRESSED CARCASS CUTTING SYSTEM, AND GRIPPING POSITION IDENTIFICATION METHOD**

(30) Priority: 08.11.2022 JP 2022178764
(71) Applicant: MAYEKAWA MFG. CO., LTD., Tokyo 135-8482 (JP)
(72) Inventor: HIRAYAMA, Junta, Tokyo 135-8482 (JP); HINO, Kazuchika, Tokyo 135-8482 (JP); TOKUYAMA, Kotaro, Tokyo 135-8482 (JP); KURIYAMA, Hiroko, Tokyo 135-8482 (JP); TOKUMOTO, Masaru, Tokyo 135-8482 (JP)
(74) Representative: Regimbeau
(86) International application number: PCT/JP2023/039554
(87) International publication number: WO 2024/101260

(57) **Abstract**

A grasping position identification system is a system for identifying a grasping position of a carcass which has been divided into right and left halves along a spine. The system is provided with an imaging device and a grasping position identification device. The imaging device is configured to image a cut surface of the carcass. The grasping position identification device is configured to identify, in an image captured by the imaging device, a feature point as a reference for the grasping position in an inner region of an outline of the cut surface.

## Description

### TECHNICAL FIELD

The present disclosure relates to a grasping position identification system, a carcass cutting system, and a grasping position identification method.

### BACKGROUND

For example, in the meat processing of relatively large livestock such as pigs and cattle, pre-processed meat is cut into right and left halves by splitting it down the spine (backbone) to create a pair of carcasses, and each carcass is further cut into anterior and posterior parts. Such cutting processes have conventionally been performed manually by workers using knives, but automation using meat processing machinery is desired to ensure uniform quality and worker safety, as well as to improve processing efficiency. For example, Patent Document 1 discloses techniques related to a cutting device and a cutting method in a major dividing process of carcasses. This document describes that a pair of suspended carcasses to be cut is supported by a support bar extending from front to back along a substantially horizontal direction, which fixes the posture of the carcasses during cutting.

### Citation List

### Patent Literature

Patent Document 1: JP2013-31916A

### SUMMARY

### Problems to be Solved

In order to cut a carcass with good quality in the automated cutting process, it is effective to stabilize the posture of the carcass by grasping it with a bar-shaped grasping member which clamps the carcass, for example, as described in Patent Document 1. The grasping position of the carcass by the grasping member can be determined, for example, based on features of the carcass extracted by analyzing images obtained by imaging the carcass. Extraction of features from such images is expected to improve accuracy by applying prediction techniques using learning models. In this case, the learning model can be constructed by preparing teacher data that teaches the relationship between images and features and using the teacher data to train the prediction model.

The head of a carcass to be cut is removed from the slaughtered animal during preprocessing. This head removal process is generally performed manually by workers, and there is no small amount of variation in the position of the head removal. Therefore, the length of the neck part of the carcass that remains after the head is removed varies among individuals. If such a neck part of the carcass is selected as the reference feature for identifying the grasping position as described above, the accuracy of the prediction model for identifying the grasping position may decrease due to individual differences.

At least one embodiment of the present disclosure was made in view of the above circumstances, and an object thereof is to provide a grasping position identification system, a carcass cutting system, and a grasping position identification method whereby it is possible to accurately identify the carcass grasping position.

### Solution to the Problems

In order to solve the above problem, a grasping position identification system according to at least one embodiment of the present disclosure, for identifying a grasping position of a carcass which has been divided into right and left halves along a spine, is provided with: an imaging device for imaging a cut surface of the carcass; and a grasping position identification device for identifying, in an image captured by the imaging device, a feature point as a reference for the grasping position in an inner region of an outline of the cut surface.

In order to solve the above problem, a carcass cutting system according to at least one embodiment of the present disclosure is provided with: a grasping position identification system according to at least one embodiment of the present disclosure; a grasping device for grasping a carcass in the grasping position identified by the grasping position identification system; and a cutting device for cutting the carcass grasped by the grasping device.

In order to solve the above problem, a grasping position identification method according to at least one embodiment of the present disclosure, for identifying a grasping position of a carcass which has been divided into right and left halves along a spine, includes: a step of imaging a cut surface of the carcass; and a step of identifying, in an image captured by an imaging device, a feature point as a reference for the grasping position in an inner region of an outline of the cut surface.

### Advantageous Effects

At least one embodiment of the present disclosure provides a grasping position identification system, a carcass cutting system, and a grasping position identification method whereby it is possible to accurately identify the carcass grasping position.

### BRIEF DESCRIPTION OF DRAWINGS

FIG. 1 is a schematic front view of a pair of carcasses.
FIG. 2 is a configuration diagram showing a grasping position identification system according to an embodiment and surrounding components.
FIG. 3 is a schematic top view showing the arrangement layout of the imaging device of FIG. 2.
FIG. 4 is a schematic view showing some aspects of the feature point that can be identified in the pair of carcasses of FIG. 1.
FIG. 5 is a flowchart of a grasping position identification method according to an embodiment.

### DETAILED DESCRIPTION

Embodiments of the present invention will now be described in detail with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.

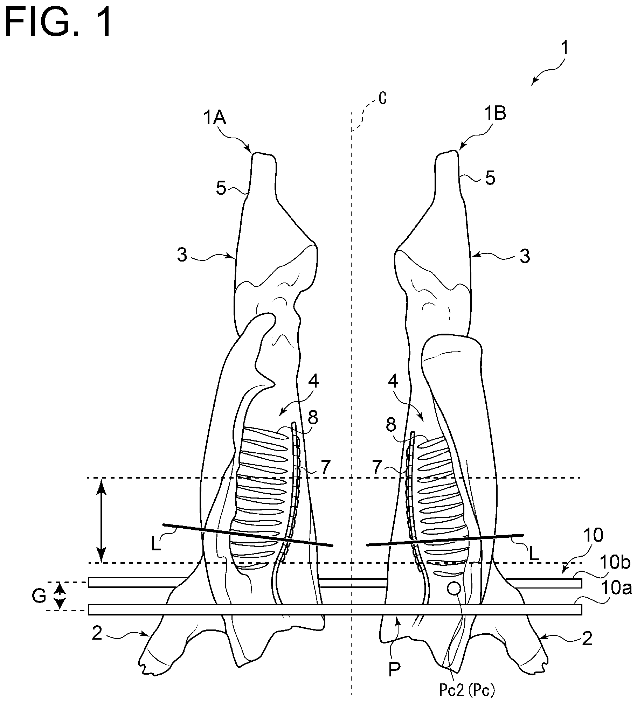

First, with reference to FIG. 1, a carcass 1 to be targeted by a grasping position identification system according to at least one embodiment of the present disclosure will be described. FIG. 1 is a schematic front view of a pair of carcasses 1.

The pair of carcasses 1 is meat of relatively large livestock such as pigs and cattle which has been divided into right and left halves along a spine 7 (backbone). The pair of carcasses 1 includes a left carcass 1A and a right carcass 1B. The pairs of carcasses 1 is arranged symmetrically about the central axis C, with the anterior part 2 of each carcass facing down (the posterior part 3 facing up), the dorsal side facing inward (the ventral side facing outward), and a cut surface 4, where the spine 7 and ribs 8 can be seen, facing frontward. The pair of carcasses is suspended and supported by holding the legs 5, which are shown at the top of FIG. 1, by means of a clamping mechanism (not shown).

The pair of carcasses 1 thus suspended and supported is grasped by a grasping device 10 to maintain their stable posture when the cutting process is carried out to cut the anterior part 2 by a cutting device (not shown). The grasping device 10 includes a first grasping member 10a and a second grasping member 10b. The first grasping member 10a is arranged so as to extend along a direction crossing the pair of carcasses 1 suspended and supported along the vertical direction, and is capable of contacting the pair of carcasses 1 from the front side (the front of paper in FIG. 1). The second grasping member 10b is arranged so as to extend along a direction crossing the pair of carcasses 1 suspended and supported along the vertical direction, and is capable of contacting the pair of carcasses 1 from the back side (the back of paper in FIG. 1). The first grasping member 10a and the second grasping member 10b can be driven by an actuator (not shown) to increase or decrease the distance between each other in the depth direction and clamp the pair of carcasses 1.

As shown in FIG. 1, the first grasping member 10a and the second grasping member 10b can be moved by an adjustment mechanism (not shown) along the vertical direction as viewed from the front side of the pair of carcasses 1, so that the grasping position P of the pair of carcasses 1 is variable. In particular, the first grasping member 10a and the second grasping member 10b are placed at different positions along the vertical direction with a predetermined distance G as viewed from the front side of the pair of carcasses 1. When moved by the adjustment mechanism, the first grasping member 10a and the second grasping member 10b can move together while maintaining the distance G (i.e., the relative positional relationship between the first grasping member 10a and the second grasping member 10b is maintained constant).

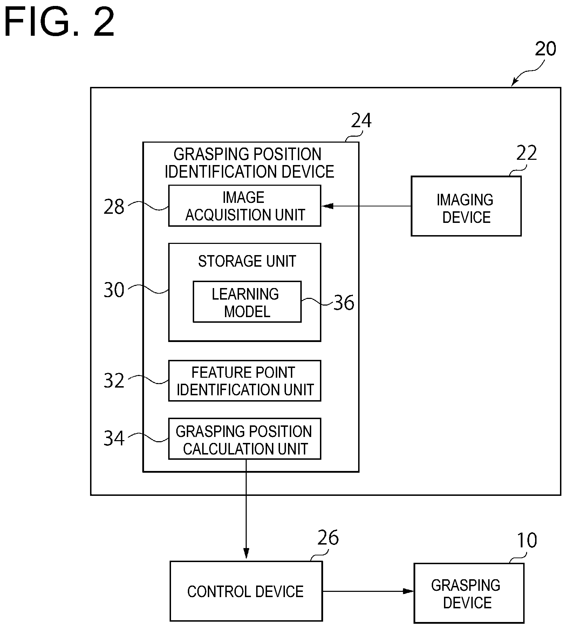

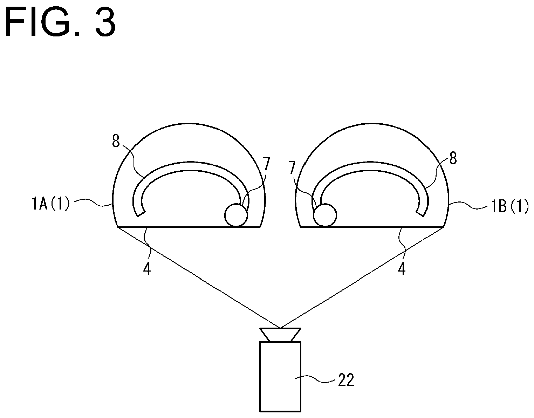

Next, a grasping position identification system 20 for identifying the grasping position P, at which the grasping device 10 grasps the pair of carcasses 1 having the above configuration, will be described. FIG. 2 is a configuration diagram showing the grasping position identification system 20 according to an embodiment and surrounding components. FIG. 3 is a schematic top view showing the arrangement layout of the imaging device 22 of FIG. 2.

As shown in FIG. 2, the grasping position identification system 20 is a system for identifying the grasping position P of the pair of carcasses 1 and is equipped with an imaging device 22 and a grasping position identification device 24. FIG. 2 shows, in addition to the grasping position identification system 20, the above-described grasping device 10 and a control device 26 configured to acquire the grasping position P identified by the grasping position identification system 20 to control the grasping device 10.

As shown in FIG. 3, the imaging device 22 may be a camera or other device positioned opposite the cut surface 4 of the pair of carcasses 1 to image the pair of carcasses 1. The image captured by the imaging device 22 may be a still image or a moving image. The number of imaging devices 22 can be one or more.

The grasping position identification device 24 is used to identify the cutting position L of the pair of carcasses 1 using the image captured by the imaging device 22 and includes, for example, a Central Processing Unit (CPU), a Random Access Memory (RAM), a Read Only Memory (ROM), a computer-readable storage medium, and the like. Then, a series of processes for realizing various functions is stored in the storage medium or the like in the form of a program, as an example. The CPU reads the program out to the RAM or the like and executes processing/calculation of information, thereby realizing the various functions. The program may be installed in the ROM or another storage medium in advance, or may be stored in the computer-readable storage medium and provided, or may be distributed through wired or wireless communication means, for example. The computer-readable storage medium may be a magnetic disk, a magneto-optical disk, a CD-ROM, a DVD-ROM, or a semiconductor memory.

FIG. 2 shows the functional configuration of the grasping position identification device 24 of the grasping position identification system 20, including an image acquisition unit 28, a storage unit 30, a feature point identification unit 32, and a grasping position calculation unit 34.

The image acquisition unit 28 is configured to acquire the image captured by the imaging device 22.

The storage unit 30 is configured to store various data necessary for the arithmetic processing of the grasping position identification device 24. For example, it stores a learning model 36 used for predicting a feature point Pc in the feature point identification unit 32. The learning model 36 is a prediction model for predicting the feature point Pc based on the image acquired by the image acquisition unit 28 as input, and is learned using images acquired by the image acquisition unit 28 in the past as teacher data.

The feature point identification unit 32 is configured to identify the feature point Pc in the image acquired by the image acquisition unit 28. The feature point Pc is identified as a feature point that serves as a reference when calculating the grasping position P in the grasping position calculation unit 34.

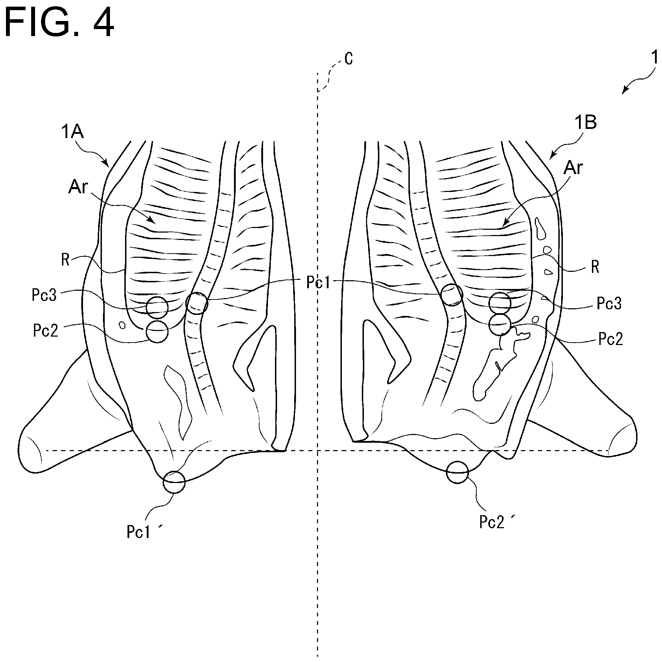

Some aspects of the feature point Pc will now be described. FIG. 4 is a schematic view showing some aspects of the feature point Pc that can be identified in the pair of carcasses 1 of FIG. 1.

First, FIG. 4 shows the neck part of each carcass 1 as feature points Pc1' and Pc2' according to a comparative example. However, as indicated by the feature points Pc1' and Pc2', the neck part of the carcass 1 is generally formed by the manual head removal by workers, so individual differences are likely to appear (in FIG. 4, the height positions of the feature points Pc1' and Pc2' differ due to the different lengths of the neck parts remaining on the left carcass 1A and right carcass 1B). Therefore, if the grasping position P is calculated based on the feature points Pc1' and Pc2', it is easily affected by individual differences. Such a problem can be suitably solved by using the feature point Pc according to various embodiments described below.

FIG. 4 shows feature points Pc1 to Pc3 as several aspects of the feature point Pc. These feature points Pc1 to Pc3 are identified from the inner region Ar within the outline R of the cut surface 4 of each carcass 1. Since the inner region Ar of the outline R of the cut surface 4 is less affected by individual differences in carcasses, an appropriate feature point Pc suitable for calculating the grasping position P can be obtained by identifying the feature point Pc from the inner region Ar.

First, the feature point Pc1 is an aspect in which the spine that is connected to the first rib contained in the inner region Ar of the outline R of the cut surface 4 is selected as the feature point Pc. The feature point Pc2 is an aspect in which the lower end of the thoracic cavity (the lower end of the so-called spare rib) contained in the inner region Ar of the outline R of the cut surface 4 is selected as the feature point Pc. The feature point Pc3 is an aspect in which the first rib contained in the inner region Ar of the outline R of the cut surface 4 is selected as the feature point Pc. By selecting the feature points Pc1 to Pc3 contained in the inner region Ar of the outline R of the cut surface 4, the feature point Pc suitable for calculating the grasping position P can be obtained.

If the first rib is not exposed to the thoracic cavity in the inner region Ar, the feature points Pc1 and Pc3 related to the first rib may not be identified. In this case, the accuracy can be improved by using the feature point Pc2 compared to the feature points Pc1 and Pc3. Since the feature point Pc2 is relatively close to the grasping position P to be calculated, the accuracy is expected to improve by calculating the grasping position P using the feature point Pc2. On the other hand, if viscera or fat and meat pieces are attached to the lower end of the spare rib, the grasping position P can be calculated accurately by using the feature points Pc1 and Pc3 compared to the feature point Pc2.

As for the feature point Pc for calculating the grasping position P, any one of the feature points Pc1 to Pc3 may be used, or a combination thereof may be used.

In this embodiment, the feature point identification unit 32 obtains the prediction result of the feature point Pc by inputting the image acquired by the image acquisition unit 28 to the learning model 36 stored in the storage unit 30. The learning model 36 is constructed by being trained in advance using teacher data created by specifying the feature point Pc in images acquired by the image acquisition unit 28 in the past, as described above. Generally, it is difficult to identify the feature point Pc within the inner region Ar of the outline R of the cut surface 4 of the carcass 1 with high accuracy by simple image processing, but the use of the learning model 36, which is constructed using the images as teacher data, enables accurate identification of the feature point Pc.

The grasping position calculation unit 34 is configured to calculate the grasping position P based on the feature point Pc predicted by the feature point identification unit 32. In this context, the grasping position calculation unit 34 calculates the grasping position P so that it is offset, with respect to the feature point Pc identified by the feature point identification unit 32, to the opposite side from a predetermined cutting position in the carcass 1. This offset amount can be set as desired, but preferably it should be set so that the grasping position P is not too far from the feature point Pc (somewhat closer).

A method to calculate the grasping position P will be described specifically. In FIG. 1, the pair of carcasses 1 is shown with a predetermined cutting position L. The feature point Pc identified by the feature point identification unit 32 is shown at the lower end of the thoracic cavity (the lower end of the so-called spare rib) contained in the inner region Ar of the outline R of the cut surface 4. The grasping position P (in FIG. 1, the position of the first grasping member 10a on the front side) is set on the opposite side of the feature point Pc from the cutting position L. By calculating the grasping position P in this way, the distance between the grasping position P and the feature point Pc can be reduced based on the distance between the cutting position L and the grasping position P, making it less susceptible to individual differences in the carcass 1 and enabling identification of the suitable grasping position P.

Since the distance G between the first grasping member 10a and the second grasping member 10b is constant as described above, when the position of the first grasping member 10a is determined by the grasping position P, the position of the second grasping member 10b is also uniquely determined.

The grasping position P calculated by the grasping position calculation unit 34 is output to the control device 26 as the identification result of the grasping position identification device 24. The control device 26 generates a control signal to move the grasping device 10 into the acquired grasping position P. The generated control signal is sent to a moving mechanism (not shown) of the grasping device 10, and the moving mechanism is driven to move the grasping device 10 into the grasping position P.

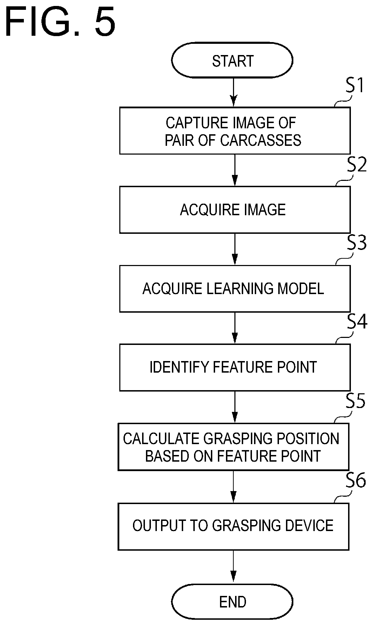

Next, a grasping position identification method performed by the grasping position identification system 20 having the above configuration will be described. FIG. 5 is a flowchart of the grasping position identification method according to an embodiment.

In the grasping position identification method, a pair of carcasses 1 is first imaged by the imaging device 22 (step S1). The image captured by the imaging device 22 is acquired by the image acquisition unit 28 (step S2).

The feature point identification unit 32 then accesses the storage unit 30 to obtain the learning model 36 that has been trained in advance using teacher data (step S3), and identifies a feature point Pc by inputting the image acquired in step S2 to the learning model 36 (step S4). The grasping position calculation unit 34 then calculates the grasping position P based on the feature point Pc identified in step S4 (step S5). The grasping position P calculated in step S5 is output to the control device 26, so that the grasping device 10 operates to grasp the pair of carcasses 1 in the grasping position P (step S6).

As described above, according to each embodiment described above, the grasping position P of the carcass 1 can be suitably identified by analyzing the image captured by the imaging device 22. In particular, since the inner region Ar of the outline R of the cut surface 4 is less affected by individual differences in the carcass 1, it is possible to identify the feature point Pc from the inner region Ar and to identify the appropriate grasping position P by using the feature point Pc as a reference.

In addition, the components in the above-described embodiments may be appropriately replaced with known components without departing from the spirit of the present disclosure, or the above-described embodiments may be appropriately combined.

The contents described in the above embodiments would be understood as follows, for instance.
(1) A grasping position identification system according to one aspect, for identifying a grasping position of a carcass which has been divided into right and left halves along a spine, is provided with: an imaging device for imaging a cut surface of the carcass; and a grasping position identification device for identifying, in an image captured by the imaging device, a feature point as a reference for the grasping position in an inner region of an outline of the cut surface.
   According to the above aspect (1), by analyzing the image captured by the imaging device, the grasping position of the carcass can be suitably identified. The position of the neck part of the carcass varies among individuals depending on where the head is removed from the meat, so if this position is selected as the feature point, it is difficult to determine the appropriate grasping position based on the feature point. In contrast, the inner region of the outline of the cut surface is less affected by individual differences in carcasses, so detecting the feature point from this region makes it possible to identify the appropriate grasping position based on the feature point.
(2) In another aspect, in the above aspect (1), the grasping position is set to a position offset from the feature point to an opposite side from a cutting position of the carcass.
   According to the above aspect (2), when the grasping position is identified based on the feature point, the grasping position is offset from the feature point to the opposite side from the carcass cutting position. As a result, the distance between the grasping position and the feature point can be reduced based on the distance between the cutting position and the grasping position, making it less susceptible to individual differences in carcasses and enabling identification of the suitable grasping position.
(3) In another aspect, in the above aspect (1) or (2), the grasping position identification device is configured to identify a spine that is connected to a first rib contained in the cut surface as the feature point.
   According to the above aspect (3), by selecting the spine connected to the first rib contained in the cut surface as the reference feature point for identifying the grasping position, it is possible to identify the suitable grasping position.
(4) In another aspect, in the above aspect (1) or (2), the grasping position identification device is configured to identify a lower end of a thoracic cavity contained in the cut surface as the feature point.
   According to the above aspect (4), by selecting the lower end of the thoracic cavity (the lower end of the so-called spare rib) contained in the cut surface as the reference feature point for identifying the grasping position, it is possible to identify the suitable grasping position.
(5) In another aspect, in the above aspect (1) or (2), the grasping position identification device is configured to identify a first rib contained in the cut surface as the feature point.
   According to the above aspect (5), by detecting the first rib contained in the cut surface as the reference feature point for identifying the grasping position, it is possible to identify the suitable grasping position.
(6) In another aspect, in any one of the above aspects (1) to (5), the grasping position identification device is configured to identify the grasping position based on the image, using a learning model that has been trained using the image acquired in the past as teacher data.
   According to the above aspect (6), the grasping position can be accurately identified by image analysis using the learning model. Generally, it is difficult to identify the feature point within the inner region of the outline of the cut surface of the carcass with high accuracy by simple image processing, but the use of the learning model, which is constructed using the images as teacher data, enables accurate identification of the feature point within the inner region of the outline of the cut surface.
(7) A carcass cutting system according to one aspect is provided with: a grasping position identification system according to any one of the above aspects (1) to (6); a grasping device for grasping a carcass in the grasping position identified by the grasping position identification system; and a cutting device for cutting the carcass grasped by the grasping device.
   According to the above aspect (7), the carcass to be cut is grasped based on the grasping position accurately identified by the grasping position identification system according to each aspect, so that the carcass can be cut with good quality by the cutting device.
(8) In another aspect, in the above aspect (7), the grasping device includes: a first grasping member capable of contacting the carcass from a front side; and a second grasping member which contacts the carcass from a back side in a predetermined position relative to the first grasping member.
   According to the above aspect (8), the carcass is grasped with both the front and back surfaces of the carcass sandwiched by the first and second grasping members, respectively, so that the carcass can be cut in a stable position.
(9) In another aspect, in the above aspect (7) or (8), the grasping position is identified so as not to interfere with a cutting range of the cutting device set for the carcass.
   According to the above aspect (9), since the grasping position is identified so as not to interfere with the cutting range, the grasping position suitable for cutting can be identified while preventing interference between the cutting device and the grasping member.
(10) A grasping position identification method according to one aspect, for identifying a grasping position of a carcass which has been divided into right and left halves along a spine, includes: a step of imaging a cut surface of the carcass; and a step of identifying, in an image captured by an imaging device, a feature point as a reference for the grasping position in an inner region of an outline of the cut surface.

According to the above aspect (10), by analyzing the image captured by the imaging device, the grasping position of the carcass can be suitably identified. The position of the neck part of the carcass varies among individuals depending on where the head is removed from the meat, so if this position is selected as the feature point, it is difficult to determine the appropriate grasping position based on the feature point. In contrast, the inner region of the outline of the cut surface is less affected by individual differences in carcasses, so detecting the feature point from this region makes it possible to identify the appropriate grasping position based on the feature point.

### Reference Signs List

- 1: Carcass
- 1A: Left carcass
- 1B: Right carcass
- 2: Anterior part
- 3: Posterior part
- 4: Cut surface
- 5: Leg
- 7: Spine
- 8: Rib
- 10: Grasping device
- 10a: First grasping member
- 10b: Second grasping member
- 20: Grasping position identification system
- 22: Imaging device
- 24: Grasping position identification device
- 26: Control device
- 28: Image acquisition unit
- 30: Storage unit
- 32: Feature point identification unit
- 34: Grasping position calculation unit
- 36: Learning model
- R: Outline
- Ar: Inner region

## Claims

1. A grasping position identification system for identifying a grasping position of a carcass which has been divided into right and left halves along a spine, comprising:
an imaging device for imaging a cut surface of the carcass; and
a grasping position identification device for identifying, in an image captured by the imaging device, a feature point as a reference for the grasping position in an inner region of an outline of the cut surface.

2. The grasping position identification system according to claim 1,
wherein the grasping position is set to a position offset from the feature point to an opposite side from a cutting position of the carcass.

3. The grasping position identification system according to claim 1 or 2,
wherein the grasping position identification device is configured to identify as the feature point a spine that is connected to a first rib contained in the cut surface.

4. The grasping position identification system according to claim 1 or 2,
wherein the grasping position identification device is configured to identify as the feature point a lower end of a thoracic cavity contained in the cut surface.

5. The grasping position identification system according to claim 1 or 2,
wherein the grasping position identification device is configured to identify as the feature point a first rib contained in the cut surface.

6. The grasping position identification system according to claim 1 or 2,
wherein the grasping position identification device is configured to identify the grasping position based on the image, using a learning model that has been trained using the image acquired in the past as teacher data.

7. A carcass cutting system, comprising:
the grasping position identification system according to claim 1 or 2;
a grasping device for grasping a carcass in the grasping position identified by the grasping position identification system; and
a cutting device for cutting the carcass grasped by the grasping device.

8. The carcass cutting system according to claim 7,
wherein the grasping device includes:
a first grasping member capable of contacting the carcass from a front side; and
a second grasping member which contacts the carcass from a back side in a predetermined position relative to the first grasping member.

9. The carcass cutting system according to claim 7 or 8,
wherein the grasping position is identified so as not to interfere with a cutting range of the cutting device set for the carcass.

10. A grasping position identification method for identifying a grasping position of a carcass which has been divided into right and left halves along a spine, comprising:
a step of imaging a cut surface of the carcass; and
a step of identifying, in an image captured by an imaging device, a feature point as a reference for the grasping position in an inner region of an outline of the cut surface.
